## Europäisches Patentamt
## European Patent Office
## Office européen des brevets

(11) Veröffentlichungsnummer: **0 292 742 B1**

# (12) EUROPÄISCHE PATENTSCHRIFT

(45) Veröffentlichungstag der Patentschrift:
**31.07.91 Patentblatt 91/31**

(51) Int. Cl.⁵: **F16B 25/00**

(21) Anmeldenummer: **88107111.2**

(22) Anmeldetag: **04.05.88**

---

(54) **Distanzschraube.**

(30) Priorität: **08.05.87 DE 3715420**
**23.10.87 DE 3735887**

(43) Veröffentlichungstag der Anmeldung:
**30.11.88 Patentblatt 88/48**

(45) Bekanntmachung des Hinweises auf die
Patenterteilung:
**31.07.91 Patentblatt 91/31**

(84) Benannte Vertragsstaaten:
**AT BE CH DE ES FR GB GR IT LI LU NL SE**

(56) Entgegenhaltungen:
**DE-A- 1 960 604**
**DE-B- 2 126 914**
**DE-C- 1 962 465**
**US-A- 4 486 134**

(73) Patentinhaber: **Adolf Würth GmbH & Co. KG**
**Maienweg 10**
**W-7118 Künzelsau (DE)**

(72) Erfinder: **Knoche, Alfons**
**Overbergstrasse 7**
**W-5758 Fröndendorf (DE)**

(74) Vertreter: **Patentanwälte RUFF, BEIER und**
**SCHÖNDORF**
**Neckarstrasse 50**
**W-7000 Stuttgart 1 (DE)**

## Beschreibung

Die Erfindung betrifft eine Distanzschraube zum Befestigen von Bauelementen wie Latten, Fensterrahmen oder dgl. im Abstand an einem Bauwerk laut Oberbegriff des Hauptanspruches.

Eine Distanzschraube dieser Art ist bekannt (DE-PS 2805071). Das Übergangsgewinde zur Vorbereitung des Einschraubens des dickeren Kopfgewindes in die Bohrung des zu befestigenden Bauelementes ist bei dieser bekannten Distanzschraube als Konus mit einem Konuswinkel zwischen 30° und 90° ausgebildet, alle Gewindeteile besitzen gleiche Gewindeganghöhe und gleichsinnige Drehrichtung und zusätzlich sind an diesem konischen Übergangsgewinde noch mindestens zwei Spannuten ausgebildet, die je eine Schneidkante aufweisen. Durch diesen Gewindekonus mit Schneidkanten wird ein Spanausschnitt in der Bohrung des zu befestigenden Bauteiles bewirkt und damit die materialverdrängende Wirkung des dickeren Kopfgewindes reduziert bzw. ausgeschaltet. Mit dieser bekannten Distanzschraube kann zwar das Einschrauben des dickeren Kopfgewindes erleichtert und die verdrängende Wirkung des Gewindes auf die Bohrungswandung verringert werden, diese bekannte Lösung besitzt jedoch den Nachteil, daß zuviel Material aus der Bohrung des zu befestigenden Bauelementes durch Spanabhebung ausgeräumt wird und das dickere Kopfgewinde daher nicht fest genug im Bauelement verankert wird. Die Schraubverbindung zwischen dem Kopfgewinde und dem zu befestigenden Bauteil ist von Anfang an lose oder wird dies zumindest im Laufe der Zeit und wackelt.

Es ist ebenfalls eine Schraube zur Befestigung einer Schicht aus Isoliermaterial an einer Unterlage bekannt, bei der an der Außenseite des Isoliermaterials eine dünne Lage Blech vorhanden ist (DE-B-2126914). Die Schraube bohrt sich ein Loch in der dünnen Blechlage und wird nach Einbohren in die Unterlage an der äußeren Blechlage mit einem Kopfgewinde festgelegt. In dem Isoliermaterial wird die Schraube geführt. Um ein zu schnelles Aufprallen der Bohrspitze auf der Unterlage zu vermeiden, enthält die Schraube ein mittleres Gewinde, das in Zusammenwirken mit dem Loch in der äußeren Blechlage ein Herabfallen der Schraube verhindert.

Es ist daher Aufgabe der Erfindung, eine Distanzschraube dieser Art zu schaffen, bei der das Einschrauben des dickeren Kopfgewindes in die Bohrung des zu befestigenden Bauelementes zwar erleichtert ist, hierdurch jedoch trotzdem ein fester Sitz des Kopfgewindes im Bauelement gewährleistet ist.

Diese Aufgabe wird ausgehend von einer Distanzschraube laut Oberbegriff des Hauptanspruches durch dessen kennzeichnende Merkmale gelöst. Vorteilhafte Weiterbildungen insbesondere auch bezüglich einer geringfügigen axialen Verschiebbarkeit des Kopfgewindes ergeben sich aus den Unteransprüchen.

Bei der erfindungsgemäßen Distanzschraube wird das erleichterte Einschrauben des dickeren Kopfgewindeabschnittes in die Bohrung des zu befestigenden Bauelementes nicht durch einen spanabhebenden Vorgang erreicht, sondern ausschließlich durch spanlose Verformung des Materials der Bohrungswandung. Damit ist gewährleistet, daß auch bei weichen Materialien des zu befestigenden Bauelements mit Sicherheit ein fester wackelfreier Sitz des Kopfgewindes in der Bohrung erreicht wird, da ja kein Material aus der Bohrung entfernt wird, sondern allenfalls radial nach außen verdrängt wird. Die Bohrungswand wird durch diesen spanlosen Verformungsvorgang außerdem verdichtet, wodurch der spätere Sitz des Kopfgewindes noch erhöht wird. Durch die zusätzlich noch vorgesehenen gewindefreien Abschnitte des zylindrischen Übergangsabschnittes werden zusätzliche Freiräume für die Materialverdrängung geschaffen, das Material kann sich damit bei der spanlosen Verformung besser und freier verformen.

Eine erfindungsgemäße Distanzschraube kann an sich sehr einfach und billig in einem einzigen Arbeitsgang durch Walzen hergestellt werden. Für bestimmte Zwecke kann es jedoch vorteilhaft sein, die Distanzschraube im Sinne der Unteransprüche aus zwei vorgefertigten Einzelteilen zusammenzusetzen, nämlich aus einer außen das Kopfgewinde aufweisenden Hülse und einem das Verankerungsgewinde aufweisenden Bolzen, wobei die Hülse verdrehungsfest am Bolzen befestigt ist. Diese erfindungsgemäße Weiterbildung ist sowohl bei einer bekannten Distanzschraube mit spanabhebendem Übergangsgewinde der eingangs erwähnten bekannten Art anwendbar, sie ist jedoch von besonderem Vorteil mit einer spanlos arbeitenden Distanzschraube laut Hauptanspruch.

Die eingangs erwähnten bekannten Distanzschrauben besitzen den zusätzlichen Nachteil, daß das zu befestigende Bauelement starr mit dem Bauwerk verbunden ist und das Bauelement sich daher bei thermischen Belastungen nicht ungehindert ausdehnen kann. Dies ist besonders bei Fensterrahmen aus Kunststoff von Nachteil, da durch die hierbei auftretenden Spannungen die Schweißnähte einreißen.

Um auch diesen Nachteil zu vermeiden, wird gemäß einer Weiterbildung der Erfindung vorgeschlagen, bei der aus zwei Teilen zusammengesetzten Distanzschraube die Hülse zwar verdrehungsfest am Bolzen zu befestigen, jedoch in begrenztem Maße eine axiale Verschiebung zwischen Bolzen und Hülse vorzusehen. Obwohl auch diese Maßnahme im Prinzip bei Distanzschrauben mit konischem spannabhebend wirkenden Übergangsgewinde anwendbar ist, ist diese Weiterbildung von besonderem Vorteil in Kombination mit einer spanlos arbeitenden erfindungsgemäßen Distanzschraube nach Hauptanspruch, da nur bei dem hiermit erreichbaren

EP 0 292 742 B1

guten und festen Sitz des Kopfgewindes im Bauelement die geringfügige axiale Verschiebbarkeit zwischen Kopfgewinde und Verankerungsgewinde zulässig ist, ohne die Gesamtfestigkeit der Montageverbindung zu beeinträchtigen.

Die Ausbildung des Kopfgewindes auf einer aufgesetzten Gewindehülse ist an sich bekannt (DAS 1962465), allerdings nur mit einer verdrehbar aufgesetzten Gewindehülse, die außerdem nicht axial verschiebbar ist.

Die Erfindung wird im folgenden anhand schematischer Zeichnungen an Ausführungsbeispielen näher erläutert. Hierbei zeigen :

Fig. 1        eine ein Bauelement mit Abstand vor einem Bauwerk halternde Distanzschraube ;

Fig. 2        eine abgeänderte Distanzschraube ;

Fig. 3-7      weitere Ausführungsbeispiele ;

Fig. 8        eine weitere Möglichkeit einer Distanzschraube ;

Fig. 9        die Ansicht eines Rohlings zur Herstellung der Schraube nach Fig. 8 ;

Fig. 10       eine der Fig. 1 entsprechende Darstellung be einer abgeänderten Ausführungsform der Distanzschraube.

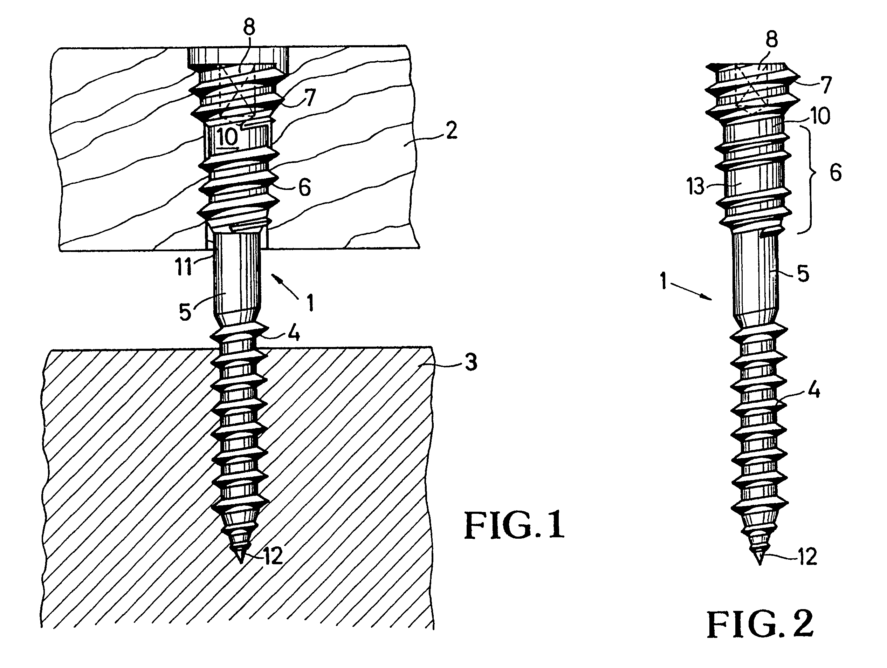

Fig. 1 zeigt eine Distanzschraube 1, mit welcher ein Bauelement 2, beispielsweise ein Fensterrahmen, in einem vorbestimmten Abstand an einem Bauwerk 3 befestigt ist. Die Distanzschraube 1 ist aus einem Stück beispielsweise durch Walzen hergestellt und umfaßt ein im Bauwerk 3 eingeschraubtes Verankerungsgewinde 4, einen anschließenden gewindefreien Schaftabschnitt 5, ein sich darüber anschließendes, im Kerndurchmesser und auch im Außendurchmesser etwas dickeres Übergangsgewinde 6 und ein am Kopfende vorgesehenes wiederum dickeres Kopfgewinde 7. Die Gewinde 4 und 7 besitzen gleiche Gewindeganghöhe und sie sind vorzugsweise als Holzschraubengewinde ausgebildet. Alle drei Gewindeabschnitte 4, 6 und 7 besitzen außerdem gleichsinnige Drehrichtung. Das Übergangsgewinde 6 kann gleiche Gewindeganghöhe wie die Gewinde 4 und 7 aufweisen, dieses Gewinde 6 kann jedoch ggf. auch eine von den anderen Gewinden unterschiedliche Gewindesteigung aufweisen. Am stirnseitigen Kopfende der Distanzschraube 1 ist eine Ausnehmung 8 zum Einstecken eines Werkzeugs ausgebildet, beispielsweise ein Innensechskant. Der Außendurchmesser des Verankerungsgewindes 4 besitzt in dem in Fig. 1 dargestellten, im wesentlichen maßstabsgetreu jedoch vergrößert dargestellten Ausführungsbeispiel einen Außendurchmesser von 6 mm, der anschließende gewindefreie Abschnitt 5 einen Außendurchmesser von 5 mm, der untere Schraubenabschnitt ist hier also als sogenannte Dünnschaftschraube ausgebildet. Der Kerndurchmesser des Übergangsgewindes 6 beträgt etwa 6,5 mm, der zugehörigen Außendurchmesser ist 9 mm. Der Außendurchmesser des oberen Kopfgewindes ist 10 mm, der zugehörige Kerndurchmesser beträgt ca. 8,5 mm.

Das Übergangsgewinde 6 ist zylindrisch ausgebildet und bildet zusammen mit dem oberen Kopfgewinde 7 eine Art Stufengewinde. Im Übergangsabschnitt zwischen diesen beiden Gewinden 6 und 7 ist in dem Ausführungsbeispiel nach Fig. 1 noch ein zusätzlicher gewindefreier Abschnitt 10 vorgesehen, der einen Außendurchmesser von etwa dem des Kerndurchmessers des Übergangsgewindes 6 besitzt.

Bei der Montage wird zunächst in das Bauelement 2 ein Loch 11 von beispielsweise 8 mm Durchmesser gebohrt. Über die Werkzeugausnehmung 8 wird dann die Distanzschraube 1 durch die Bohrung 11 mit ihrer Spitze 12 in das Bauwerk 3 eingeschraubt, bis schließlich auch das Übergangsgewinde 6 mit dem etwa größeren Außendurchmesser in die 8 mm-Bohrung 11 einzieht. Beim weiteren Einschrauben wird durch dieses Übergangsgewinde 6 durch spanlose Verformung die Bohrung 11 aufgeweitet, so daß anschließend beim weiteren Einschrauben das dickere Kopfgewinde 7 in eine bereits gegenüber der ursprünglichen Bohrung 11 etwas aufgeweitete Bohrung eingeschraubt wird. Hierdurch wird das Einsetzen der Distanzschraube erleichtert. Trotzdem wird durch die rein spanlose Verformung der ursprünglichen Bauelement-Bohrung 11 ein fester Sitz des Kopfgewindes 7 im Bauelement 2 erreicht, wenn die Schraube weiter eingedreht wird, bis schließlich die gewünschte Endstellung nach Fig. 1 erreicht ist, in welcher auch das obere Kopfgewinde 7 ganz oder teilweise in das Bauelement 2 eingeschraubt ist. Um die spanlose Materialverformung durch das Übergangsgewinde 6 zu erleichtern, ist zwischen dem Übergangsgewinde 6 und dem Kopfgewinde 7 noch der zusätzliche gewindefreie Abschnitt 10 vorgesehen. Bei Bedarf können gemäß Fig. 2 auch unmittelbar innerhalb des Übergangsgewindes 6 noch eine oder mehrere zusätzliche gewindefreie Abschnitte 13 vorgesehen sein.

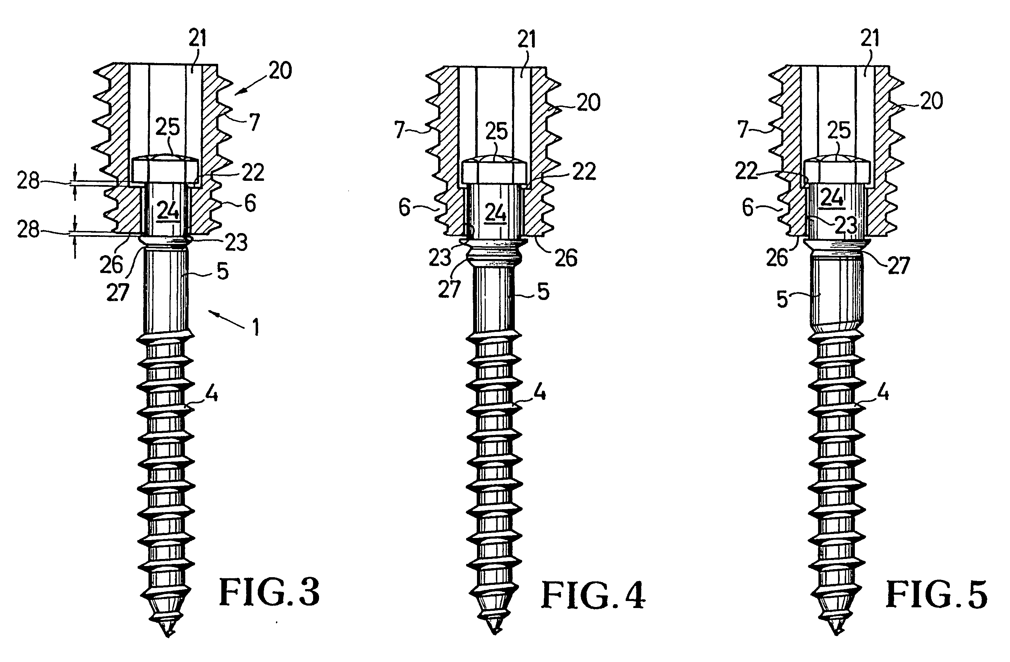

Fig. 3 zeigt im vergrößerten Maßstab den Kopfabschnitt einer Distanzschraube, bei welcher das Kopfgewinde 7 und auch das Übergangsgewinde 6 auf der Außenseite einer Hülse 20 aufgewalzt sind. Die nach oben offene Ausnehmung 21 der Hülse 20 ist als Innensechskant ausgebildet, der mit einer Stufe 22 in eine zylindrische Bohrung 23 übergeht, deren Innendurchmesser etwa dem Außendurchmesser des zylindrischen Schaftes 24 der Distanzschraube 1 entspricht, auf dessen unterem Ende wieder das Verankerungsgewinde 4 aufgebracht ist. Der Schaft 24 endet in einem Sechskant-Schraubenkopf 25, der mit dem Innensechskant 21

3

der Hülse zusammenpaßt. Die Hülse 20 ist damit über das Zusammenwirken des Schraubensechskant 25 und des Innensechskant 21 verdrehungsfest auf dem Schaft der Schraube aufgesetzt. Unterhalb der Stirnfläche 26 der Hülse 20 ist der Schaft der Schraube zu einem Anschlag 27 aufgebördelt. Der Abstand zwischen dem Anschlag 27 und der Unterseite des Schraubenkopfes 25 ist etwas größer gewählt als der Abstand zwischen der Schulter 22 und dem Stirnende 26 der Hülse 20, so daß ein geringes axiales Spiel 28 zwischen Hülse 20 und Schraube besteht. Damit können im fertig montierten Zustand geringe axiale Ausdehnungen zwischen Bauelement und Bauwerk aufgenommen werden. Bei dieser erfindungsgemäßen Weiterbildung einer Distanzschraube könnte das Übergangsgewinde 6 anstelle des dargestellten Stufengewindes in bekannter Weise auch als spanabhebender Konusabschnitt ausgebildet sein.

Beim Ausführungsbeispiel nach Fig. 3 ist das Verankerungsgewinde 4 erst nach dem Einsetzen der Distanzschraube 1 in die zylindrische Bohrung 23 der Hülse 20 aufgewalzt, es handelt sich hier also um eine sogenannte Dünnschaftschraube, bei welcher der Außendurchmesser des Verankerungsgewindes 4 größer ist als der Außendurchmesser des Schaftes 5. Beim Ausführungsbeispiel nach Fig. 4 ist der sich unmittelbar unterhalb des Sechskant-Schraubenkopfes 25 anschließende zylindrische Schaftabschnit 24 im Außendurchmesser größer gewählt als der Außendurchmesser des Verankerungsgewindes 4, so daß die Distanzschraube 1 in diesem Ausführungsbeispiel schon vor dem Zusammenbau mit der Hülse 20 bis auf den Anschlag 27 fertig hergestellt werden kann, da in diesem Fall auch die zylindrische Bohrung 23 der Hülse 20 im Durchmesser größer ist als das Verankerungsgewinde 4, die Schraube mit dem Gewinde 4 also durch die Bohrung 23 hindurchgesteckt werden kann. Erst anschließend wird dann der Anschlag 27 aufgebördelt. Das gleiche gilt für das Ausführungsbeispiel nach Fig. 5, hier ist der gesamte obere Schaftabschnitt 5 im Durchmesser größer bzw. gleich groß wie der Außendurchmesser des Verankerungsgewindes 4 gewählt, so daß auch in diesem Fall das Gewinde 4 schon vor dem Zusammenbau aufgewalzt werden kann.

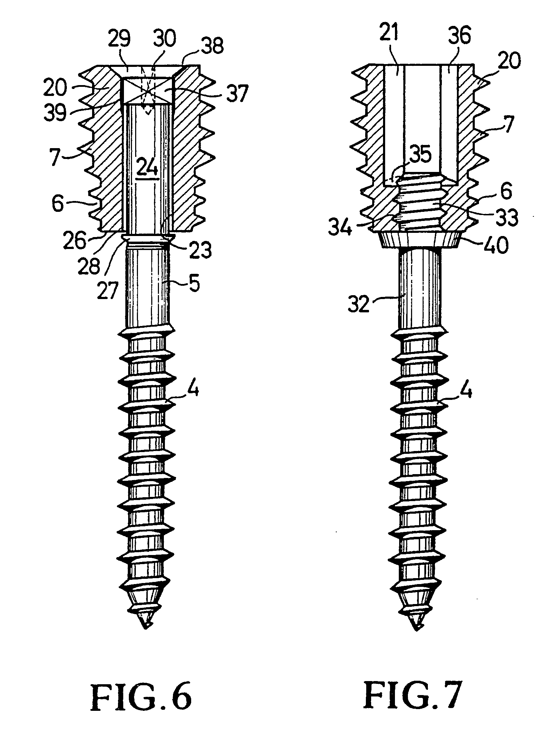

Bei der Distanzschraube nach Fig. 6 ist auf der Unterseite eines üblichen Schrauben-Versenkkopfes 29 ein Vierkant 37 ausgebildet, der wieder in einen zylindrischen Schaftabschnitt 24 übergeht. In diesem Ausführungsbeispiel ist auf der Oberseite der Hülse 20 eine zum Senkkopf 29 passende konische Vertiefung 38 ausgebildet, die in eine zum Vierkant 37 passende Vierkantausnehmung 39 übergeht, die schließlich in die zylindrische Hülsenbohrung 23 übergeht. Auf der Oberseite des Senkkopfes 29 ist ein Innensechskant 30 ausgebildet, über welchen die Schraube mit einem geeigneten Werkzeug einsetzbar ist. Das axiale Spiel wird in diesem Fall wiederum durch den Abstand zwischen dem aufgebördelten Anschlag 27 und der konischen Außenfläche des Senkkopfes 29 bestimmt. Das Verankerungsgewinde 4 kann im Sinne der Fig. 3 bis 5 entweder vorher oder nachher aufgewalzt sein, danach richtet sich die Dimensionierung der Hülsenbohrung.

Die verdrehungsfeste Verbindung zwischen Hülse 20 und Bolzen gemäß den Ausführungsbeispielen nach den Fig. 3 bis 6 muß nicht unbedingt mit dem erwähnten axialen Spiel 28 ausgestattet sein, in manchen Fällen kann auf die damit erzielbare axiale Verschiebbarkeit auch verzichtet werden. Es bleibt dann immer noch der Vorteil der einfachen Herstellung einer solchen Distanzschraube aus einem einfachen Schraubenbolzen mit Mehrkant-Schraubenkopf und einer gesondert hergestellten Hülse mit Außengewinde. Wenn auf eine solche axiale Verschiebbarkeit zwischen Hülse und Schraubenbolzen verzichtet werden kann, kann im Sinne der Fig. 7 die Hülse 20 auch unmittelbar mit dem Bolzen 32 vernietet werden. Der Schraubenbolzen 32 ist oben mit einem Gewindestift 33 versehen, der unten in einem Anschlagflansch 40 endet, das Bolzenende ist also ähnlich wie bei einer Schraube zur Befestigung von Rohrschellen ausgebildet. Das Gewinde des Gewindestiftes 33 ist vorzugsweise ein metrisches Gewinde. Die Hülse 20 besitzt oben wieder eine Sechskant-Werkzeugaufnahme 36 und an ihrem unteren Ende ist ein Innengewinde 34 eingeschnitten, in welches der Gewindestift 33 bis zum Anschlag 40 eingeschraubt ist. Das nach oben in die Sechskant-Ausnehmung 36 vorstehende Ende des Gewindestiftes 33 ist zu einem Nietkopf 35 vernietet, die Hülse 20 ist also drehfest und axial unverschiebbar am Bolzen 32 befestigt. Die Verdrehungsfestigkeit wird noch durch den Nietkopf 35 verbessert, dessen Rand sich an den Innensechskant 36 anlegt.

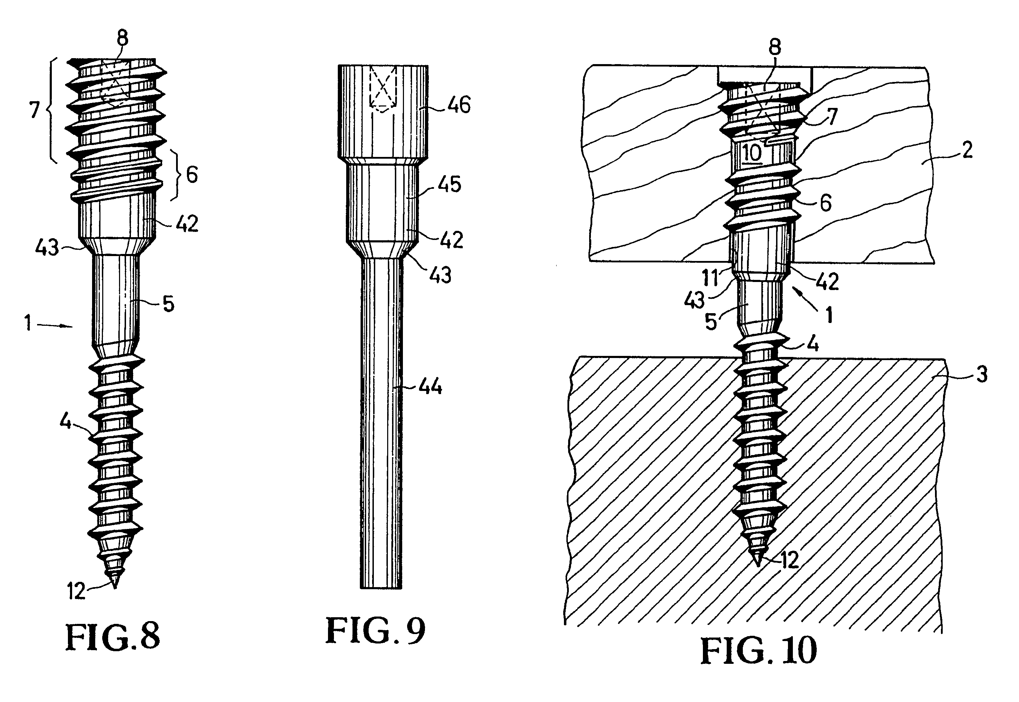

Fig. 8 zeigt eine andere Möglichkeit für die Ausbildung des Übergangsgewindes 6 für die spanlose Materialverformung im Bauelement 2 zur Erleichterung des Einschraubens des dickeren Kopfgewindes 7. In diesem Ausführungsbeispiel ist der Kerndurchmesser des Kopfgewindes 7 und der Kerndurchmesser des Übergangsgewindes 6 gleich groß gewählt und nur der Außendurchmesser des Übergangsgewindes 6 ist kleiner als der Außendurchmesser des Kopfgewindes 7 gewählt. Diese vereinfachte Ausführungsform des Übergangsgewindes hat beim Einschrauben in das Loch 11 des Bauelementes 2 die gleiche Wirkung einer spanlosen Verformung des Materials wie dies im Zusammenhang mit dem Übergangsgewinde 6 nach den Fig. 1 bis 7, bei denen auch der Kerndurchmesser des Übergangsgewindes 6 kleiner als derjenige des Kopfgewindes 7 gewählt ist, beschrieben ist. Die Profilform des Übergangsgewindes 6 kann beliebig sein, in dem gezeigten Ausführungsbeispiel nach Fig. 8 ist dieses im Außendurchmesser geringere Übergangsgewinde 6 als Trapezgewinde ausgebildet.

Eine solche Distanzschraube nach Fig. 8 mit gleichem Kerndurchmesser für Kopfgewinde 7 und Übergangsgewinde 6 kann wesentlich einfacher und billiger hergestellt werden. Ausgehend von einem Schraubenrohling nach Fig. 9 können mit einem einzigen Walzvorgang beide Gewinde 6 und 7 hergestellt werden. Der Schraubenrohling nach Fig. 9 besteht aus einem zylindrischen Abschnitt 44 mit einem Durchmesser von beispielsweise 5 mm, auf den durch einen ersten Walzvorgang das Gewinde 4 mit einem Außendurchmesser von beispielsweise 6 mm aufgewalzt wird. Darüber schließt sich mit einer Facette 43 ein im Durchmesser größerer zylindrischer Abschnitt 45 an, der in seinem Durchmesser beipielsweise 8 mm gewählt ist und eine axiale Länge von beispielsweise 12 mm besitzt. Darüber schließt sich dann weiter ein wiederum im Durchmesser etwas größerer zylindrischer Abschnitt 46 an, der einen Durchmesser von beispielsweise 8,6 mm besitzt. Durch einen einzigen Gewindewalzvorgang können auf diesen beiden im Durchmesser unterschiedlichen zylindrischen Abschnitten 45 und 46 dann die beiden Gewinde 6 und 7 aufgewalzt werden, wobei wegen des unterschiedlichen Ausgangs-Außendurchmessers das Gewinde 6 mit einem geringeren Außendurchmesser von beispielsweise 9 mm entsteht während das Gewinde 7 durch das gleiche Walzwerkzeug mit einem größeren Außendurchmesser von beispielsweise 10 mm entsteht. Beide Gewinde 6 und 7 erhalten den gleichen Kerndurchmesser von beispielsweise 7,5 mm.

Diese vereinfachte Ausbildung des Übergangsgewindes 6 mit nur kleinerem Außendurchmesser kann sowohl bei einer einstückigen Distanzschraube im Sinne der Fig. 8 angewendet werden, als auch bei der zusammengesetzten Distanzschraube nach den Fig. 3 bis 7.

Gemäß einer Weiterbildung der Erfindung hat es sich ferner noch als vorteilhaft erwiesen, in Einschraubrichtung vor dem Übergangsgewinde 6 einen zusätzlichen gewindefreien zylindrischen Führungsabschnitt 42 vorzusehen, dessen Außendurchmesser gleich oder geringfügig kleiner als der Innendurchmesser der im Bauelement 2 vorgebohrten Bohrung 11 gewählt ist. Wenn beispielsweise im Bauelement 2 vor der Montage ein Loch 11 von 8 mm Durchmesser gebohrt wird, besitzt dieser Führungsabschnitt 42 ebenfalls einen Außendurchmesser von 8 mm oder einige zehntel Millimeter weniger. Wenn die Schraube 1 beim Einschrauben des Verankerungsgewindes 4 in das Bauwerk 3 schließlich eine Stellung erreicht, in welcher der Führungsabschnitt 42 in das Loch 11 des Bauelementes 2 einzieht, so wirkt dieser Abschnitt 42 als Zentrierung beim anschließenden Einschneiden des Übergangsgewindes 6 und des darauffolgenden Kopfgewindes 7, die Schraube wird durch diesen Führungsabschnitt 42 also immer exakt zentrisch zur Bohrung im Bauelement 2 geführt und kann daher nicht verkanten sondern schneidet immer exakt mittig ein, wodurch der feste und wackelfreie Sitz des Kopfgewindes 7 in der Bohrung des Bauelementes noch weiter verbessert wird. Die Herstellung dieses Führungsabschnittes 42 ist sehr einfach, es ist lediglich nötig, bei der Herstellung der Schraube nach Fig. 8 einen Schraubenrohling gemäß Fig. 9 zu benutzen, dessen zylindrischer Abschnitt 45 für die Ausbildung des Übergangsgewindes 6 einen Außendurchmesser besitzt, welcher dem Durchmesser der Bohrung 11 des Bauelementes 2 entspricht, bei Montagebohrungen von 8 mm also beispielsweise ebenfalls 8 mm. Ausgehend von einem solchen Schraubenrohling wird dann wiederum durch einen einzigen Walzvorgang unter Freilassung des unteren zylindrischen Führungsabschnittes 42 auf dem Abschnitt 45 im oberen Bereich das Übergangsgewinde 6 und auf dem Abschnitt 46 daran anschließend dann das Kopfgewinde 7 mit gleichem Kerndurchmesser jedoch unterschiedlichen Außendurchmessern aufgewalzt.

Dieser vorteilhafte Führungsabschnitt 42 zum zentrischen Einsetzen der Schraube in das Loch 11 kann auch bei einer Schraube nach den Fig. 1 bis 7 angewendet werden, wie dies Fig. 10 zeigt, die ansonsten dem Ausführungsbeispiel nach Fig. 1 entspricht. Hier ist vor dem eigentlichen Übergangsgewinde 6, das hier wieder einen kleineren Kerndurchmesser als das Kopfgewinde 7 besitzt, ein zylindrischer Führungsabschnitt 42 vorgesehen, der in gleicher Weise wie im Zusammenhang mit Fig. 8 beschrieben zusammen mit dem Aufwalzen der Gewinde 6 und 7 durch entsprechende Bemessung des Schraubenrohlings hergestellt ist. Der Kerndurchmesser des Übergangsgewindes 6 ist in diesem Fall wieder etwas kleiner als der Außendurchmesser des gewindefreien Führungsabschnitts 42, der seinerseits etwa gleich oder geringfügig kleiner als der Durchmesser der Bohrung 11 des zu befestigenden Bauelementes 2 gewählt ist. In gleicher Weise kann dieser vor dem Übergangsabschnitt 6 vorgesehene Führungsabschnitt 42 auch an der Hülse 20 gemäß den Ausführungsbeispielen nach den Fig. 3 bis 7 vorgesehen sein, um auch hier das exakte zentrische Einsetzen der Schraube zu verbessern.

Die Maßangaben der obigen Ausführungsbeispiele sind nur beispielhaft, sie hängen von dem jeweiligen Anwendungsfall der Distanzschraube ab, die Größe und Form des Gewindes 4 hängt davon ab, ob die Schraube in einen Dübel oder unmittelbar in ein Holzbauwerk eingeschraubt wird, die Durchmesser der Gewinde 6 und 7 sowie des Führungsabschnittes 42 hängen davon ab, wie groß die Bohrung 11 in dem zu befestigenden Bauelement 2 ist und welche Haltekräfte durch das Kopfgewinde aufgenommen werden müssen, allerdings steht das Verhältnis zwischen den Außendurchmessern der Gewinde 4,6 und 7 und damit auch des Führungsabschnittes 42 in einem vorgegebenen Verhältnis zueinander, was durch die obigen Zahlenbeispiele in etwa wiedergegeben ist.

EP 0 292 742 B1

**Patentansprüche**

1. Distanzschraube zum Befestigen von Bauelementen (2) wie Latten, Fensterrahmen oder dgl. im Abstand an einem Bauwerk (3), mit einem im Bauelement (2) einschraubbaren kurzen Kopfgewinde (7), einem in Bauwerk (3) verankerbaren dünneren, von der Schraubenspitze ausgehenden Verankerungsgewinde (4) sowie einem dazwischen ausgebildeten, das Einschrauben des dickeren Kopfgewindes (7) erleichternden Übergangsgewinde (6), dadurch gekennzeichnet, daß das Übergangsgewinde (6) der Befestigung des Bauteils (2) dient und zylindrisch ausgebildet ist, sein Außendurchmesser zwischen dem des Kopfgewindes (7) und dem des Verankerungsgewindes (4) gewählt ist, und die Einschraub-Erleichterung für das dickere Kopfgewinde (7) durch spanlose Materialverformung im Bauelement (2) erreicht wird.

2. Distanzschraube nach Anspruch 1, dadurch gekennzeichnet, daß auch der Kerndurchmesser des zylindrischen Übergangsgewindes (6) zwischen dem des Kopfgewindes (7) und dem des Verankerungsgewindes (4) gewählt ist (Fig. 1 bis 7).

3. Distanzschraube nach Anspruch 1 oder 2, dadurch gekennzeichnet, daß zwischen dem Übergangsgewinde (6) und dem dickeren Kopfgewinde (7) ein gewindefreier Schaftabschnitt (10) vorgesehen ist.

4. Distanzschraube nach einem der vorhergehenden Ansprüche, dadurch gekennzeichnet, daß im Übergangsgewinde (6) mindestens ein weiterer gewindefreier Abschnitt (13) vorgesehen ist.

5. Distanzschraube nach einem der vorhergehenden Ansprüche, dadurch gekennzeichnet, daß das Gewinde des Übergangsgewindes (6) eine von der Gewindesteigung des Kopf- und Verankerungs-Gewindes (7, 4) abweichende Gewindesteigung aufweist.

6. Distanzschraube nach einem der vorhergehenden Ansprüche, dadurch gekennzeichnet, daß zwischen dem Verankerungsgewinde (4) und dem Übergangsgewinde (6) ein im Durchmesser geringer als der Außendurchmesser des Verankerungsgewindes (4) ausgebildeter gewindefreier Schaftabschnitt (5) vorgesehen ist (Dünnschaft-Schraube).

7. Distanzschraube nach einem der vorhergehenden Ansprüche, dadurch gekennzeichnet, daß der Kerndurchmesser des Kopfgewindes (7) kleiner ist als der Außendurchmesser des Übergangsgewindes (6).

8. Distanzschraube nach einem der vorhergehenden Ansprüche, dadurch gekennzeichnet, daß das Kopfgewinde (7) auf der Außenseite einer Hülse (20) ausgebildet ist, die verdrehungsfest am oberen Ende (24) eines das Verankerungsgewinde (4) aufweisenden Bolzens befestigt ist.

9. Distanzschraube nach Anspruch 8, dadurch gekennzeichnet, daß die Hülse (20) verdrehungsfest jedoch in begrenztem Maße axial verschiebbar am oberen Ende (24) des Bolzens aufgesetzt ist (Spiel 28).

10. Distanzschraube nach Anspruch 8 oder 9, dadurch gekennzeichnet, daß die Gewindehülse (20) im unteren Teil eine im Durchmesser dem Außendurchmesser des Bolzenschaftes (24) entsprechende Innenbohrung (23) aufweist, die oben in eine mehrkantige Aussparung (21) übergeht, wobei am oberen Ende des Bolzenschaftes (24) ein in diese mehrkantige Aussparung (21) passender mehrkantiger Schraubenkopf (25) ausgebildet ist, und am Bolzenschaft (24) unterhalb des unteren Hülsenendes (26) ein die Axialverschiebung der Hülse (20) auf dem Bolzenschaft (24) begrenzender Anschlag (27) ausgebildet ist.

11. Distanzschraube nach Anspruch 10, dadurch gekennzeichnet, daß der Abstand zwischen der Unterseite des Schraubenkopfes (25) und dem Anschlag (27) etwas größer als die axiale Länge der zylindrischen Innenbohrung (23) der Hülse (20) gewählt ist (Spiel 28).

12. Distanzschraube nach Anspruch 8, dadurch gekennzeichnet, daß am oberen Ende (31) des das Verankerungsgewinde (4) aufweisenden Bolzens (32) ein nach oben abstehender Gewindestift (33) ausgebildet ist, der in eine entsprechende Gewindebohrung (34) am unteren Ende der Hülse (20) eingeschraubt und dort mit der Hülse (20) vernietet ist (Nietkopf 35).

13. Distanzschraube nach einem der Ansprüche 8 bis 11, dadurch gekennzeichnet, daß in der Gewindehülse (20) eine nach oben offene Innenmehrkant-Werkzeugaufnahme (36) ausgebildet ist.

14. Distanzschraube nach einem oder mehreren der vorhergehenden Ansprüche, dadurch gekennzeichnet, daß in Einschraubrichtung vor dem Übergangsgewinde (6) ein gewindefreier zylindrischer Führungsabschnitt (42) vorgesehen ist, dessen Außendurchmesser etwa dem Innendurchmesser der Bohrung (11) des zu befestigenden Bauelementes (2) entspricht.

15. Distanzschraube nach einem oder mehreren der vorhergehenden Ansprüche, dadurch gekennzeichnet, daß das Übergangsgewinde (6) und das Kopfgewinde (7) unterschiedlichen Außendurchmesser jedoch gleichen Kerndurchmesser aufweisen (Fig. 8).

16. Distanzschraube nach Anspruch 14 und 15, dadurch gekennzeichnet, daß der Kerndurchmesser von Übergangs- und Kopfgewinde (6, 7) kleiner ist als der Außendurchmesser des gewindefreien zylindrischen Führungsabschnittes (42).

## EP 0 292 742 B1

**Claims**

1. Spacing screw for fixing components (2), such as laths, window frames, etc., in spaced manner to a structure (3), with a short head thread (7) which can be screwed into the component (2), a thinner anchoring thread (4) emanating from the screw tip and anchorable in the structure (3), as well as an intermediate transition thread (6) facilitating the screwing in of the thicker head thread (7), characterized in that the transition thread (6) is used for fixing the component (2) and is cylindrical, its external diameter being between that of the head thread (7) and the anchoring thread (4) and the screwing in of the thicker head thread (4) is facilitated by non-cutting material deformation in the component (2).

2. Spacing screw according to claim 1, characterized in that the core diameter of the cylindrical transition thread (6) is also between that of the head thread (7) and the anchoring thread (4) (figs. 1 to 7).

3. Spacing screw according to claims 1 or 2, characterized in that there is a thread-free shank portion (10) between the transition thread (6) and the thicker head thread (7).

4. Spacing screw according to one of the preceding claims, characterized in that there is at least one further thread-free portion (13) in the transition thread (6).

5. Spacing screw according to one of the preceding claims, characterized in that the thread of the transition thread (6) has a pitch differing from that of the head and anchoring threads (7, 4).

6. Spacing screw according to one of the preceding claims, characterized in that between the anchoring thread (4) and the transition thread (6) is provided a thread-free shank portion (5) whose diameter is smaller than the external diameter of the anchoring thread (4) (thin shank screw).

7. Spacing screw according to one of the preceding claims, characterized in that the core diameter of the head thread (7) is smaller than the external diameter of the transition thread (6).

8. Spacing screw according to one of the preceding claims, characterized in that the head thread (7) is formed on the outside of a sleeve (20), which is fixed in non-twisting manner to the upper end (24) of a bolt having the anchoring thread (4).

9. Spacing screw according to claim 8, characterized in that the sleeve (20) is mounted in non-twisting, but to a certain extent axially displaceable manner on the bolt end (24) (clearance 28).

10. Spacing screw according to claims 8 or 9, characterized in that the threaded sleeve (20) has in the lower portion an inner bore (23) whose diameter corresponds to the external diameter of the bolt shank (24) and which at the top passes into a polygonal recess (21) and at the upper end of the bolt shank (24) is formed a polygonal screw head (25) matching said polygonal recess (21) and on the bolt shank (24) below the lower sleeve end (26) is formed a stop (27) limiting the axial displacement of the sleeve (20) on the shank (24).

11. Spacing screw according to claim 10, characterized in that the distance between the underside of the screw head (25) and the stop (27) is somewhat larger than the axial length of the cylindrical inner bore (23) of the sleeve (20) (clearance 28).

12. Spacing screw according to claim 8, characterized in that on the upper end (31) of the bolt (32) having the anchoring thread (4) is an upwardly projecting threaded pin (33), which is screwed into a corresponding thread hole (34) at the lower end of the sleeve (20) and is riveted there to the sleeve (20) (rivet head 35).

13. Spacing screw according to one of the claims 8 to 11, characterized in that an upwardly open hexagonal recess (36) is formed in the threaded sleeve (20).

14. Spacing screw according to one or more of the preceding claims, characterized in that in the screwing-in direction upstream of the transition thread (6) is provided a thread-free cylindrical guide portion (42), whose external diameter approximately corresponds to the internal diameter of the bore (11) of the component (2) to be fixed.

15. Spacing screw according to one or more of the preceding claims, characterized in that the transition thread (6) and the head thread (7) have different external diameters, but the same core diameter (fig. 8).

16. Spacing screw according to claims 14 and 15, characterized in that the core diameter of the transition and head threads (6,7) is smaller than the external diameter of the thread-free, cylindrical guide portion (42).

**Revendications**

1. Vis d'écartement destinée à la fixation à distance contre une maçonnerie (3) d'éléments de construction (2) tels que lattes, châssis de fenêtre ou similaires, avec un filet de tête court (7) qui peut être vissé dans l'élément de construction (2), un filet d'ancrage (4) plus fin partant de la pointe de la vis, qui peut être ancré dans la maçonnerie (3) ainsi que, entre les deux, des filets intermédiaires (6) facilitant le vissage du filet de tête (7) plus gros, **caractérisée en ce que** le filet intermédiaire (6) sert à la fixation de l'élément de construction (2) et est de forme cylindrique, en ce que son diamètre extérieur est choisi entre celui du filet de tête (7) et du filet

7

d'ancrage (4), et en ce que le dispositif facilitant le vissage du filet de tête (7) plus gros est réalisé par une déformation exempte de copeaux du matériau de l'élément de construction (2).

2. Vis d'écartement selon la revendication 1, **caractérisée en ce que** le diamètre intérieur du filet cylindrique (6) est également choisi entre celui du filet de tête (7) et celui du filet d'ancrage (4) (Fig. 1 à 7).

3. Vis d'écartement selon la revendication 1 ou 2, **caractérisée en ce qu'**une section de tige non filetée (10) est prévue entre le filet intermédiaire (6) et le filet de tête (7) plus gros.

4. Vis d'écartement selon l'une quelconque des revendications précédentes, **caractérisée en ce qu'**au moins une autre section non filetée (13) est prévue dans le filet intermédiaire (6).

5. Vis d'écartement selon l'une quelconque des revendications précédentes, **caractérisée en ce que** le filet intermédiaire (6) présente un pas qui diffère du pas des filets (7, 4) de tête et d'ancrage.

6. Vis d'écartement selon l'une quelconque des revendications précédentes, **caractérisée en ce qu'**une section de tige non filetée (5), d'un diamètre plus petit que le diamètre extérieur du filet d'ancrage (4), est prévue entre le filet d'ancrage (4) et le filet intermédiaire (6) (vis à tige fine).

7. Vis d'écartement selon l'une des revendications précédentes, **caractérisée en ce que** le diamètre intérieur du filet de tête (7) est plus petit que le diamètre extérieur du filet intermédiaire (6).

8. Vis d'écartement selon l'une des revendications précédentes, **caractérisée en ce que** le filet de tête (7) est formé du côté extérieur d'une cheville (20) qui est fixée de manière à ne pas pouvoir tourner, à l'extrémité supérieure (24) d'un boulon présentant le filet d'ancrage (4).

9. Vis d'écartement selon la revendication 8, **caractérisée en ce que** la cheville (20) est montée à l'extrémité supérieure (24) du boulon, de façon à ne pas pouvoir tourner, mais reste déplaçable axialement dans une mesure limitée (jeu 28).

10. Vis d'écartement selon la revendication 8 ou 9, **caractérisée en ce que** la cheville filetée (20) présente, dans sa partie inférieure, un alésage (23) dont le diamètre correspond au diamètre extérieur de la tige du boulon (24), alésage qui se transforme dans sa partie supérieure en un évidement polygonal (21), une tête de vis polygonale (25) correspondant à cet évidement polygonal (21) étant formée à l'extrémité de la tige de boulon (24), et en ce qu'une butée (27) limitant le glissement axial de la cheville (20) sur la tige de boulon (24) est formée sur la tige de boulon (24) en dessous de l'extrémité inférieure (26) de la cheville.

11. Vis d'écartement selon la revendication 10, **caractérisée en ce que** la distance entre la partie inférieure de la tête de vis (25) et la butée (27) est choisie un peu plus grande que la longueur axiale de l'alésage intérieur cylindrique (23) de la cheville (20) (jeu 28).

12. Vis d'écartement selon la revendication 8, **caractérisée en ce que,** à l'extrémité supérieure (31) du boulon (32) présentant le filet d'ancrage (4), est formée une tige filetée (33) écartée vers le haut, qui est vissée dans un alésage (34) correspondant situé à l'extrémité inférieure de la cheville (20), et qui est rivetée à cet endroit à la cheville (20).

13. Vis d'écartement selon l'une des revendications 8 à 11, **caractérisée en ce qu'**un évidement (36) polygonal destiné à reprendre l'outil, ouvert vers le haut, est formé dans la cheville filetée (20).

14. Vis d'écartement selon l'une ou plusieurs des revendications précédentes, **caractérisée en ce qu'**une section de guidage cylindrique non filetée (42) est prévue dans la direction du vissage avant le filet intermédiaire (6), son diamètre extérieur correspondant à peu près au diamètre intérieur de l'alésage (11) de l'élément de construction (2) à fixer.

15. Vis d'écartement selon l'une ou plusieurs des revendications précédentes, **caractérisée en ce que** le filet intermédiaire (6) et le filet (7) de la tête ont un diamètre extérieur différent, mais présentent le même diamètre intérieur (Fig. 8).

16. Vis d'écartement selon les revendications 14 et 15, **caractérisée en ce que** le diamètre intérieur des filets intermédiaire et de tête (6, 7) est plus petit que le diamètre extérieur de la section (42) de guidage cylindrique non fileté.

FIG.1

FIG.2

FIG.5

FIG.4

FIG.3

FIG.6          FIG.7

FIG.8

FIG.9

FIG.10

EP 0 292 742 B1